# EUROPEAN PATENT APPLICATION

(11) **EP 2 442 486 A1**
(43) Date of publication of application: **18.04.2012**
(21) Application number: 10251812.3
(22) Date of filing: 18.10.2010
(51) Int. Cl.: H04L 12/24, H04L 12/26, H04W 24/08

(54) **Data collection for estimating the coverage of individual access points**

(71) Applicant: British Telecommunications Public Limited Company, London EC1A 7AJ (GB)
(72) Inventor: The designation of the inventor has not yet been filed
(74) Representative: Lidbetter, Timothy Guy Edwin

(57) **Abstract**

A remote management system (7) for a plurality of associated wireless access points (1, 2) operates a data collection system by collecting data from each access point (1) relating to other access points (2, 5) it has detected, including access points not associated with the same remote management system, and generating data therefrom to determine the extent of wireless coverage provided by the detected access points.

## Description

This invention relates to the collection of data relating to the radio frequency environment.

In the early development of wireless communication most transmitters were operated either directly by Government agencies, or under a licence from the Government. In such a situation, the information to determine what transmitters were operating in any particular area was readily available, at least to the appropriate authorities. However, in more recent times the proliferation of licence-exempt wireless access systems such as the IEEE 802.11 standard commonly known as "WiFi", and in particular the availability of access points which are themselves mobile, has meant that no central record is available and, even if such records existed it would be impossible to maintain up to date.

Wireless access points are used by many domestic and business users to allow multiple user terminals to have access to a single network connection from various locations in the user's premises, without the need for extensive wiring. The facility also allows user terminals to maintain contact whilst being moved around the premises.

Such access points normally have privacy settings to allow their user's terminals to exchange data securely, and prevent unauthorised use of the wireless access facility. However, as many such access points have spare capacity, many network operators now also provide them with a capability to provide network access to members of the public, with suitable partitioning and prioritisation to protect the private user. Although this facility is arranged by the network operator to provide a public service, the network operator has little control over the availability and signal quality of the service from any given access point as the service provider is dependent on its own customers as to whether the access point is kept switched on, and where on the premises the access point is actually located.

This network of publicly-available access points will be referred to herein as a "user-provided public network". However, because such access points are only provided where a user chooses to have one installed, the area of coverage of such a network is poorly understood, and not urider the control of the network operator. Coverage may also be intermittent if a user chooses to have his access point switched off when not in use ― for example at night, or when the premises are unoccupied. It would nevertheless be useful for a network operator to be able to collect data on the locations of wireless access points and the presence and interference or congestion. This would allow it to assess the prevailing conditions in a particular region, either from access points under its control or otherwise, so that underprovision causing gaps in coverage or signal traffic congestion, may be identified and addressed by providing more access points, or if interference is a problem, reducing the power output of some access points to reduce the problem.

It is known to collect such data using mobile scanning devices. However, such techniques can only give instantaneous measures for any given point, and require considerable manpower to collect the data and keep it up to date.

The present invention meets this need by providing a method of controlling one or more wireless access points each having a radio transmitter, a radio receiver and a data connection to a remote management system, by using the receiver to detect radio transmissions generated by other wireless access points, and reporting data relating to the detected access points to the remote management system.

A complementary aspect of the invention provides a method of operating a data collection system associated with a remote management system for a plurality of associated wireless access points, wherein the data collection system receives data from each access point, the data received from each access point relating to other access points it has detected, and generating data therefrom to determine the extent of wireless coverage provided by the detected access points.

This invention allows data to be collected from a large number of locations using existing infrastructure, without the need for frequent drive-around operations.

As well as using its receiver to detect transmissions directly, each wireless access point operating the invention may generate signals to prompt other wireless access points to respond, and collects data from the responses received. It may also generate signals to prompt user terminals connected to the first wireless access point to also monitor for radio transmissions generated by other wireless access points, and to report data to the first wireless, access point relating to any access points so detected.

The data collected may include any or all of signal strength, data identifying the individual wireless access points detected, and time of arrival of an identified data packet.

Preferably, the data received from each associated access point may be combined with location data for each associated access point to determine the geographical area within which coverage is provided by the detected access points. In the preferred embodiment the data received may relate to the detection of the extent to which each associated access point controlled by the remote management system can identify the presence of other associated access points. The extent of coverage of any one of the associated access points can be estimated as a polygonal region bounded by the associated access points which can detect it.

The data received may be used to control load balancing between the access points.

The data received may also relate to the detection of the extent to which the plurality of access points controlled by the remote management system can detect other access points not controlled by the remote management system, and to estimate the positions of such other access points.

One of the functions of a wireless access point is to listen out for RF signals. In particular, when first turned on, they scan the available channels in order to detect RF transmissions from neighbouring access points, and adapt to any such signals they detect by selecting a channel on which to operate which will avoid interference with the transmission and reception of signals by other access points. The invention makes use of this characteristic, by using at least some of the access points to report the presence and characteristics of neighbouring access points, for the same or different wireless technologies.

Modern wireless access points are designed to be programmable by download from the service provider's remote management system, and so any programming software necessary to implement the invention in the access points can be downloaded by this means.

The end-users, and not the service provider, have control over the exact position of each access point, but as the access point equipment will have been supplied to a specific customer for use at a specified address, and that location can be further confirmed by reference to the recorded location of the physical network termination to which the access point is connected, the service provider will nevertheless have data sufficient to indicate the location to within a few metres.

An access point can identify a neighbouring access point and measure the received signal strength. By using each of the access points under its control to detect other access points it is then possible to plot a map of coverage for its own services, for any other individual service provider, or any combination of service providers. Other properties, such as the presence of interference between two neighbouring access points, can also be identified.

However, unless the power output of the neighbouring access point is known, its distance cannot be determined. Even if the power output were known, the direction, and therefore location, cannot be derived reliably. As access points are usually located indoors, factors such as the propagation environment will vary considerably.

However, much more data may be derived from analysis of the data from several neighbouring access points, allowing the operator to plot which networks are available from which premises.

If the operator identifies access points which are detectable from each other, then continuous coverage can be assumed to be available in the region between these hubs.

The operator can also identify any access points, other than the measuring points, which are themselves detectable from more than one measuring point, from which continuity of service can be assumed in the region between the measurement points. The signal strength data can be used to determine the approximate location of the detected access point. Detection of an access point by more than two measurement points allows the location to be determined more precisely.

In a preferred embodiment, the wireless access points deployed by an internet service provider (ISP) in many individual premises are arranged to detect other wireless access points and record their identities, (e.g. the service identifier (SSID), and device identifier (MAC address) in the WiFi system), their signal strength, the RF channel on which they are operating, etc. The ISP operating the pool of access points uses its remote management system to poll some or all of the access points for this information. The ISP will also have geographic position information for each access point (such as the postal address of the customer, or of the fixed network termination to which the access point is connected) and hence will be able to produce useful plots of coverage for the location and likely coverage for each access point detected.

Some wireless network operators use the same SSID network name for all access points in their network. Measurements taken of such access points would allow the area of coverage for this service to be plotted. Where the same device identifier (MAC) address is picked up by several access points (ideally three or more) it is possible to estimate the location of each access point using the relative signal strengths, using the principle of triangulation. This would rely on certain assumptions, notably that the propagation environment is similar for all the measurement paths - such assumptions are reasonable where the access points are widely spaced compared with the typical size of the premises in which the access points are located.

Another useful application of the invention would be to plot coverage as a distance around each assumed access point position. It is reasonable to assume that any device identifier (MAC) address detected by two or more access points is likely to provide coverage within the polygon whose points are defined by the access points, (or along the line connecting them when there are only two), as well as for an indeterminate distance beyond that range. The assumed signal strengths may be indicative of how far the coverage extends beyond this polygon.

All of these techniques may be used to estimate the coverage of individual access points and networks using the same SSID. This technique enables coverage to be determined without the expense of performing drive-around measurements, where measurements are made at many locations in every street.

An embodiment of the invention will be described by way of example, with reference to the drawings, in which:
Figure 1 is a diagram illustrating a region in which a number of wireless access points are deployed;
Figure 2 is a schematic representation of the various elements which co-operate to perform the invention;
Figure 3 is a flow diagram illustrating a process performed according to the invention.

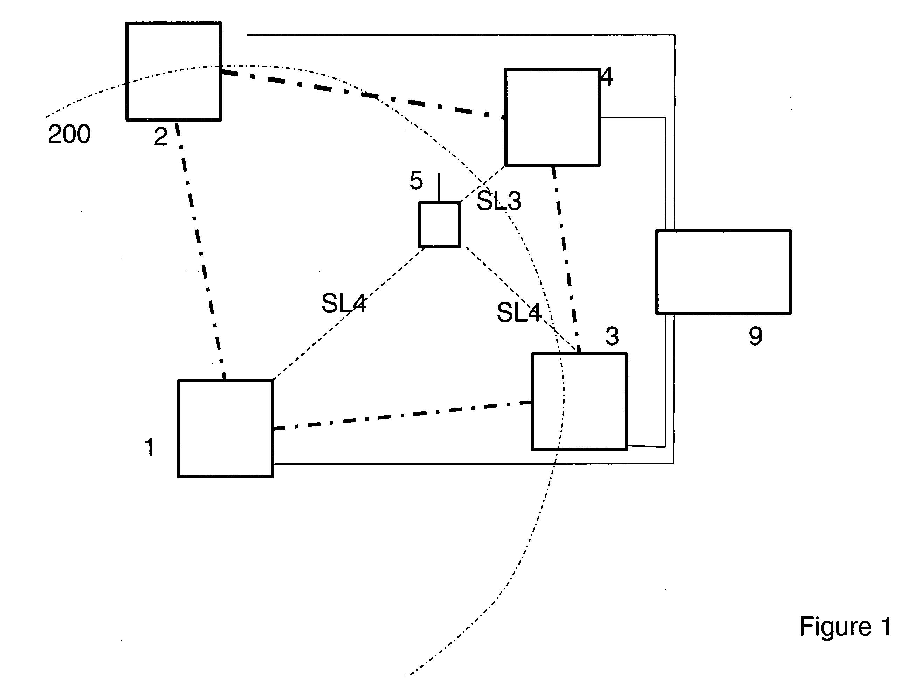

Figure 1 depicts five wireless access points 1, 2, 3, 4, 5. Four of the wireless access points 1, 2, 3, 4 are operated by one network provider, through an internet service provider platform 9. These access points can detect each others' transmissions if they are within range of each other. They can also detect other wireless access points, operated by other service providers, represented by access point 5. Each access point manages its own transmissions in order to avoid interference with the transmissions it detects from the neighbouring access points. The invention makes use of data collected by the access points relating to the transmissions they detect.

Detection of an access point by another access point within range is always possible if they are both operating on the same channel. However if they are operating on different channels then it would only happen when an access point scans the other channels. Such scanning of channels usually only happens when an access point is choosing the best channel to use, usually on start up. However, the access point can be arranged to perform background scans at other times, either at pre-set periods or on command from a remote server.

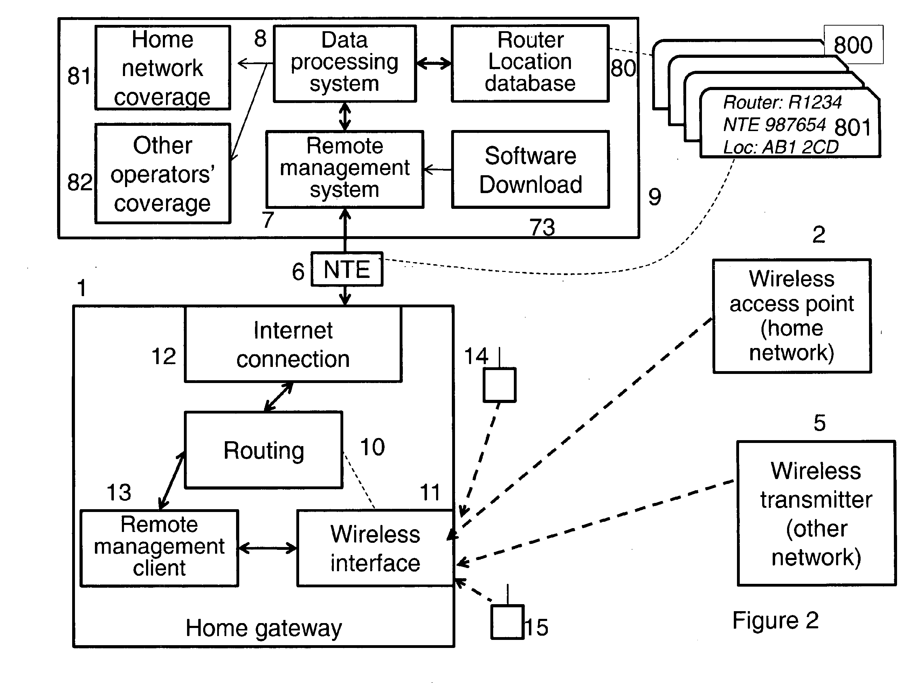

Figure 2 depicts one of the wireless access points 1 in more detail, together with the co-operating internet service provider platform 9. Two other wireless access points 2, 5 are depicted, respectively connected to the same service provider platform 9 (referred to herein as the "home network"), and to another service provider platform (not shown, referred to herein as the "foreign network"). The service provider platform 9 has information about the location and characteristics of access points connected to its home network, but not to access points connected to the foreign network. (There may, of course, be more than one foreign network).

Each wireless access point 1 operating the method of the present invention service has a routing processor 10 for directing data to and from interfaces 11, 12. Such interfaces include a network interface 12 giving access to a telecommunications network by way of a network terminal 6 and thus to the Internet Service Provider platform 9. A wireless interface 11 gives access to one or more wireless user terminals 14, 15, allowing those terminals to communicate with each other and with the internet service provider 9. A typical access point (router) also has a connection such as an Ethernet port for connecting a user terminal to the access point using a wired connection, but as such a connection is not relevant to the operation of the present invention it has been omitted from the drawing.

The access point 1 has a programmable remote management client store 13 for storing program data on a storage medium to allow executable programs to be downloaded from a remote management system operated by the Internet Service Provider platform 9, and to allow the access point 1 to be controlled in accordance with such programs.

The other wireless access points 2, 3, 4 connected to the same internet service provider platform 9 have similar features.

A further wireless access point 5 is depicted, representative of wireless access points operating in the same area as the access points 1, 2 but not connected to the same internet service provider platform 9.

The internet service provider platform 9 also comprises a storage medium 73 for maintaining a program which may be downloaded to the wireless access points 1, 2, 3, 4 under its control. This program can be used to configure the access points to co-operate with a remote management system 7 of the platform 9.

The internet service provider platform 9 comprises a data processing system. A remote management server 7 is arranged to co-operate with one or more remote management clients 13 running on individual access points 1, 2, etc.

The remote management system 7 has access to a store 73 of software which may be downloaded to individual access points. It is known to download upgrades to installed consumer hardware in this way, to improve performance, eliminate bugs, or install new services. The embodiment depicted herein uses this process to install, and subsequently to maintain, the program data necessary for the access points to perform the data collection process. However, the access points may instead be programmed with the process before deployment to customers, or the program may be downloaded from a data carrier by the user or by a technician during a site visit.

The remote management system 7 is associated with a data processing system 8 which receives data from individual access points 1, 2, 3, 4, and analyses the data it receives with reference to known location data retrieved from a database 80.

The location database 80 provides a look-up table to match each access point's network identity to geographical data identifying its location. Such data may include postcode (ZIP code) data 800, and the identity 801 of the network termination 6 to which it is connected.

The remote management client 13 collects data relating to the wireless transmissions of neighbouring access points 2, 3, 4, detected by the wireless interface 11, and delivers the data to the remote management server 7, which analyses the data and delivers the results to a database 81, which records data relating to access points 2, 3, 4 of the same operator, and a database 82 which records data relating to access points 5 of other operators.

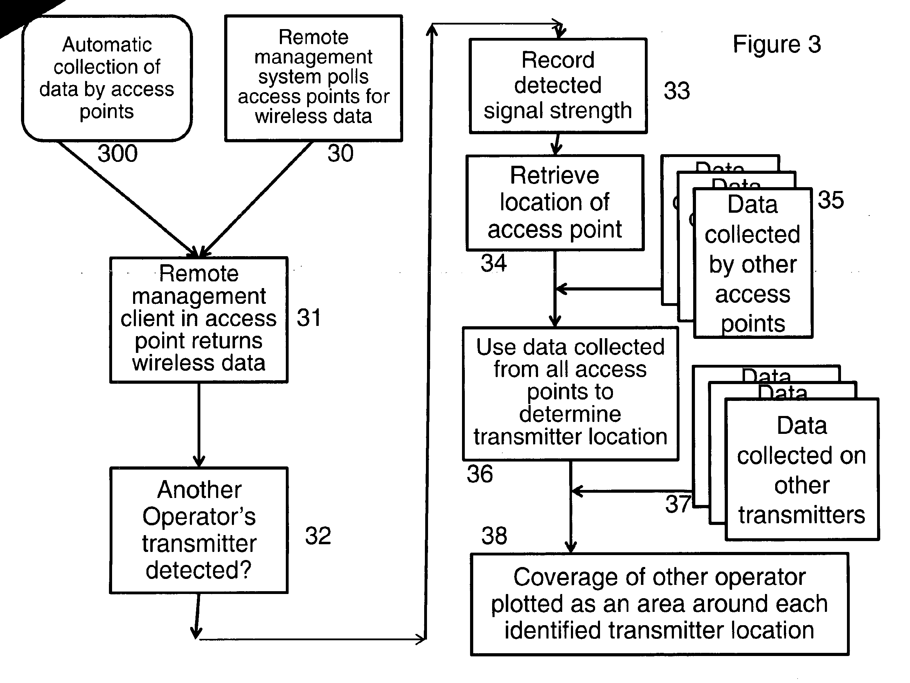

The processes performed by the data processing system 8 are depicted in the flow chart of Figure 3.

An access point 1 programmed to operate the measurement process detects individual neighbouring access points 2, 3, 5 (as shown in Figure 1, the access point 4 is out of range of the access point 1) and returns data to the data processing system 8 maintained by the internet service platform 9 (step 31). The access point may deliver such data automatically (300), or in response to a prompt 30 from the data processing system 8. The detection may be passive, by simply listening out for transmissions from neighbours, or the access point may send out probe messages in order to prompt the neighbours to identify themselves, as is done for example when a user terminal first seeks an access point to which to connect.

Individual user terminals 14, 15 are arranged to scan for access points, usually on set up to identify which access points are available. The access point 1 can be arranged to receive reports from the terminals relating to the presence of other access points 2, 3, 4, 5, either on set up, or during a later scan made in response to a command from the access point. This allows the effective extension of the search range of the access point 1, as the user terminals 14, 15 may be able to detect neighbouring access points not detectable directly by the first access point 1.

The data processing system 8 assesses the data it receives and generates a map of the wireless coverage available at each access point 1, 2, 3, 4, with reference to location data from the location database 80.

Such data will relate both to other access points of the same operator, and to coverage by other operators.

With regard to the operator's own coverage, the operator can determine that, if two or more access points can detect each other, there is a reasonable assumption that wireless access is available within the area bounded by those access points, and also for a distance beyond that area similar in extent to the spacing between the access points. Thus, in the example of Figure 1, if access point 1 can be detected by nearby access points 2 and 3, but not by more a distant access point 4, the extent of coverage 200 can be assumed to extend, to a first approximation at least, to a distance surrounding the access point 1 greater than the distance to the closer access points 2, 3, but not as great as the distance to the further access point 4. This is however, only an approximation, as propagation of the signal may vary by direction, for example because of obstructions such as buildings. This is particularly relevant for access points provided for domestic applications, as such access points are usually sited indoors.

By building up data on the estimated coverage of each access point 1, 2, 3, 4 based on their ability to detect each other, the overall extent of coverage of the network of access points can be determined. This information can then be used, for example, to determine where the user-provided public network is not providing coverage available to the public, and so the network provider can install its own public access points to provide infill coverage.

The access points operating the invention will not only detect each other, but will also detect any nearby transmitter 5 operated by other operators (step 32). Data collected relating to these can also be used even though their geographical locations, power outputs, and other characteristics may not be known to the analysis process.

In the example depicted in Figure 1, a transmitter 5 is detected by three access points 1, 2, 4. By comparing which access points can detect the transmitter 5, an approximate area of coverage of that transmitter can be determined. Detection of other transmitters operated by the same service provider can allow an estimate to be built up of the extent of coverage of that service provider.

The absolute position of the transmitter 5, or even its absolute distance from any given access point 1, 2, 4, cannot be determined directly, but its location can be derived from the measurements which can be taken.

For example, the detected signal strength (SL3, SL4) will be dependent on the detector's distance from the transmitter 5. In the example shown, the signal level SL4 detected by two of the access points (1, 3) suggests that the access point 5 is approximately equidistant from them, whilst the stronger level SL3 detected by another access point 4 indicates that it is nearer to that one. Another access point 2 does not detect the foreign access point 5, indicating that it is likely to be more distant, (although failure to detect a transmitter needs to be interpreted with caution, as it could be from some other cause, such as the foreign transmitter 5 having a directional antenna, or that there is some obstruction preventing a line-of-sight path between the transmitter 5 and receiver 2).

Note that the absolute transmitter strength of the access point 5 may not be known, and is not necessary for such analysis to be made. There will be some uncertainty in such an estimate because of factors such as additional path length as a result of a lack of line-of-sight communication, and any variations in path loss characteristics between the signal paths. Clearly, the certainty of the estimate of the location of an access point 5 can be improved if more access points 1, 2, 3, 4 can detect it.

Some wireless access systems provide a beacon transmission service to allow synchronisation. The beacon signals are sequentially numbered so that it is possible to confirm that all access points are listening to the same transmission. This provides a common time frame available to the access points 1, 2, 3, 4, so that differences in path length between the detected transmitter 5 and each access point can be measured by determining the intervals between reception of the same signal by each access point.

In the example depicted in Figure 1, the access points 1, 2, 4 each detect the transmitter 5. The access point 4 detects a greater signal strength SL3 than the strength SL4 detected by the other access points 1, 2, 3. Although the signal level generated by the transmitter 5 is not directly knowable by the access points, the relative levels detected by each access point can be used to determine the position of the transmitters.

Referring again to Figure 3, each access point reports the signal strength it detects for a given transmitter (step 33). The data processing system 8 records this data together with location data 800/801 for the detecting access point retrieved from the database 80 (step 34).

This process is repeated (35) for all cases in which an access point 1, 2, 3, 4 detects a foreign transmitter 5. For each such transmitter 5 detected in this way, the data from all the access points is analysed to estimate the location and coverage provided by that transmitter (step 36).

This process can be performed for each transmitter detected in a given network (step 37), and the data then collated (step 38) to determine the overall coverage provided by that network of transmitters.

The data collected may be used in many different ways. For example, it allows an operator to determine the extent of wireless coverage available to the public from its own access points, or from those of its competitors, giving an indication as to where additional capacity may be needed. It may also be used to assist in load-balancing operations, by reducing the effective range of an access point in high demand if there are neighbouring access points which can meet some of that demand, or to control the overloaded access point so as to make itself unavailable to some user terminals so that they seek one of the neighbouring access points.

## Claims

1. A method of controlling a first wireless access point having a radio transmitter, a radio receiver and a data connection to a remote management system, by using the receiver to detect radio transmissions generated by other wireless access points, and reporting data relating to the detected access points to the remote management system.

2. A method according to claim 1, wherein the first wireless access point generates signals to prompt other wireless access points to respond, and collects data from the responses received.

3. A method according to claim 1 or claim 2, wherein the data includes signal strength.

4. A method according to claim 1, claim 2 or claim 3, wherein the data includes data identifying the individual wireless access points detected.

5. A method according to claim 1, claim 2 or claim 3, wherein the data includes time of arrival of an identified data packet.

6. A method according to claim 1, claim 2, claim 3, or claim 4, wherein the first wireless access point generates signals to prompt user terminals connected to the first wireless access point to also monitor for radio transmissions generated by other wireless access points, and to report data to the first wireless access point relating to any access points so detected.

7. A method of operating a data collection system associated with a remote management system for a plurality of associated wireless access points, wherein the data collection system receives data from each access point, the data received from each access point relating to other access points it has detected, and generating data therefrom to determine the extent of wireless coverage provided by the detected access points.

8. A method according to claim 7, wherein the data received from each associated access point is combined with location data for each associated access point to determine the geographical area within which coverage is provided by the detected access points.

9. A method according to claim 7 or claim 8, wherein the data received relates to the detection of the extent to which each associated access point controlled by the remote management system can identify the presence of other associated access points.

10. A method according to claim 9, wherein the data received is used to control load balancing between the access points.

11. A method according to claim 9, wherein the extent of coverage of any one of the associated access points is estimated as a polygon region bounded by the associated access points which can detect it.

12. A method according to claim 7 or 8, wherein the data received relates to the detection of the extent to which the plurality of access points controlled by the remote management system can detect other access points not controlled by the remote management system.

13. A method according to claim 12, wherein the data received is used to estimate the position of such other access points.

14. A method according to claim 7, claim 8, claim 9, claim 10, claim 11, claim 12 or claim 13, wherein the data includes signal strength.

15. A method according to claim 7, claim 8, claim 9, claim 10, claim 11, claim 12, claim 13, or claim 14, wherein the data includes time of arrival of an identified data packet.
